# FASCICULE DE BREVET EUROPEEN

(11) **EP 3 832 180 B1**
(45) Date de publication et mention de la délivrance du brevet: **07.09.2022**
(21) Numéro de dépôt: 20211414.6
(22) Date de dépôt: 03.12.2020
(51) Int. Cl.: F16K 21/00, E03D 3/04, F16K 21/12

(54) **MECANISME A FERMETURE AUTOMATIQUE TEMPORISEE POUR UN ROBINET**
AUTOMATISCHER ZEITVERZÖGERTER SCHLIESSMECHANISMUS FÜR EIN VENTIL
AUTOMATIC TIME-DELAYED CLOSING MECHANISM FOR A VALVE

(30) Priorité: 06.12.2019 FR 1913878
(43) Date de publication de la demande: 09.06.2021
(73) Titulaire: Delabie, 80130 Friville Escarbotin (FR)
(72) Inventeur: DARRAS, Maxime, 80130 FRIVILLE-ESCARBOTIN (FR)
(74) Mandataire: Cabinet Chaillot

(56) Documents cités:
- EP-A2- 0 264 638
- FR-A1- 2 913 085
- GB-A- 402 757

## Description

La présente invention concerne le domaine des robinets, et porte en particulier sur un mécanisme à fermeture automatique temporisée pour un robinet, tel qu'un robinet pour douche, lavabo ou urinoir, ainsi que sur un robinet comprenant un tel mécanisme.

Les robinets existants pour douche, lavabo ou urinoir comprennent généralement, d'une part, un corps de forme sensiblement cylindrique dans lequel débouche une arrivée d'eau et depuis lequel s'étend une sortie d'eau, et, d'autre part, une cartouche qui est insérée dans ce corps. Cette cartouche, amovible et interchangeable, est le plus souvent surmontée d'un bouton de commande, de type bouton-poussoir, pour déclencher la sortie d'eau pendant un temps prédéterminé, l'ouverture du robinet étant obtenue en exerçant une poussée sur le bouton de commande et la fermeture du robinet se produisant automatiquement au bout d'une certaine durée après que l'appui sur le bouton de commande a été relâché.

Un tel robinet à fermeture automatique temporisée est décrit dans la demande de brevet français FR2913085A1. Ce robinet comporte, à l'intérieur, une cartouche comprenant un pot de temporisation et un piston portant un joint à lèvre, le clapet principal du robinet s'ouvrant lorsqu'un utilisateur appuie sur le bouton de commande du robinet, et le piston revenant plus ou moins lentement vers le siège principal du robinet, selon la section d'un canal de fuite ménagé à l'intérieur du pot de temporisation, lorsque la poussée sur le bouton poussoir est relâchée par l'utilisateur.

Cependant, de tels robinets ont pour principal inconvénient de pouvoir être maintenus ouverts, notamment par malveillance dans le milieu carcéral ou même dans des installations sanitaires d'établissements scolaires ou sportifs, lorsque le bouton de commande du robinet est maintenu enfoncé. Ces robinets existants ne permettent donc pas une protection antiblocage contre le vandalisme en ce qui concerne la mise en écoulement permanente, ce qui peut engendrer une surconsommation ou une dégradation des lieux d'installation par inondation.

La présente invention vise à résoudre les inconvénients de l'état antérieur de la technique, en proposant un mécanisme à fermeture automatique temporisée pour un robinet, tel qu'un robinet pour douche, lavabo ou urinoir, comprenant un clapet secondaire permettant de réaliser une fonction antiblocage dans le mécanisme de manière à empêcher un écoulement d'eau permanent lorsque le bouton de commande du robinet est maintenu enfoncé, ce qui permet ainsi d'éviter un gaspillage d'eau.

La présente invention a donc pour objet un mécanisme à fermeture automatique temporisée pour un robinet, tel qu'un robinet pour douche, lavabo ou urinoir, caractérisé par le fait qu'il comprend : - un boîtier cylindrique creux à l'intérieur duquel est apte à coulisser axialement une tige de commande, l'extrémité supérieure de la tige de commande étant configurée pour être solidaire d'un bouton de commande de robinet, la partie inférieure du boîtier cylindrique creux constituant un siège auxiliaire, l'extrémité inférieure de la tige de commande portant un clapet auxiliaire associé audit siège auxiliaire, le retour du clapet auxiliaire sur son siège auxiliaire étant provoqué par un premier ressort de compression, au moins un canal de décompression étant ménagé dans le boîtier cylindrique creux en aval du siège auxiliaire pour permettre un écoulement de fluide vers une sortie de décompression lorsque le clapet auxiliaire est ouvert ; - un pot de temporisation dont la partie supérieure est reliée de manière fluidique à la partie inférieure du boîtier cylindrique creux et dans lequel peut coulisser un piston de temporisation qui porte un clapet principal associé à un siège principal ménagé au fond du pot de temporisation, ledit pot de temporisation étant configuré pour être relié à une arrivée de fluide du robinet par l'intermédiaire d'au moins une ouverture d'entrée de fluide ménagée dans le pot de temporisation, ledit clapet principal étant solidaire d'un joint à lèvre dont la lèvre s'applique sur la surface latérale intérieure du pot de temporisation, la surface latérale intérieure du pot de temporisation comportant une strie longitudinale pour permettre une fuite de fluide calibrée entre la partie du pot de temporisation au-dessus du joint à lèvre et la partie du pot de temporisation au-dessous du joint à lèvre lors du déplacement du piston de temporisation, le retour du clapet principal sur son siège principal étant provoqué par un second ressort de compression et étant ralenti par le joint à lèvre en fonction de la section de ladite strie longitudinale ; - au moins un canal de sortie ménagé en aval du siège principal et permettant un écoulement de fluide vers une sortie de fluide du robinet ; et - un clapet secondaire porté par l'extrémité inférieure d'un plongeur solidaire du piston de temporisation, ledit plongeur pénétrant dans le siège principal, un siège secondaire associé audit clapet secondaire étant ménagé entre le siège principal et l'au moins un canal de sortie.

De cette manière, l'ouverture du clapet auxiliaire en appuyant sur le bouton de commande fixé sur la tige de commande provoque, par décompression, l'ouverture du clapet principal puis la montée du piston de temporisation dans le pot de temporisation jusqu'à la fermeture du clapet secondaire, par la suite la fermeture du clapet auxiliaire en relâchant l'appui sur le bouton de commande provoque à la fois la descente du piston de temporisation dans le pot de temporisation et l'ouverture du clapet secondaire, ce qui permet un écoulement temporisé de fluide à travers l'au moins un canal de sortie jusqu'à la fermeture du clapet principal.

L'ouverture du clapet auxiliaire permet ainsi de créer une décompression à l'intérieur de la cartouche, ce qui provoque la montée du piston de temporisation dans le pot de temporisation du fait de la pression du fluide présent dans la partie inférieure du pot de temporisation, une fuite d'amorçage vers l'au moins un canal de décompression survenant lors de l'ouverture du clapet auxiliaire.

La disposition du clapet secondaire sur l'extrémité inférieure du plongeur solidaire du piston de temporisation permet l'ajout d'une fonction antiblocage (ou anti-vandalisme) de manière simple et peu coûteuse dans le mécanisme. Le clapet secondaire, qui se ferme lorsque la tige de commande est maintenue enfoncée, permet d'empêcher un écoulement d'eau vers l'au moins un canal de sortie lorsque la tige de commande est maintenue enfoncée, ce qui permet d'éviter un gaspillage d'eau.

Le mécanisme à fermeture automatique temporisée selon la présente invention comporte moins de composants par rapport à l'état antérieur de la technique, permettant ainsi d'obtenir un coût de revient moins élevé et un démontage moins complexe en cas de maintenance. En particulier, comparé au mécanisme décrit dans le document FR2913085A1, dans le mécanisme selon la présente invention, un unique joint est nécessaire pour réaliser le joint à lèvre du piston de temporisation et le clapet principal.

Il est à noter qu'un technicien de maintenance pourra également, si besoin, retirer la fonction antiblocage du mécanisme, en retirant le clapet secondaire sur l'extrémité inférieure du plongeur.

Le clapet auxiliaire et le clapet secondaire sont, de préférence, des joints toriques. Cependant, toute autre forme de joint pourrait également être utilisée, sans s'écarter du cadre de la présente invention.

Le siège auxiliaire est, de préférence, constitué par l'extrémité d'une jupe s'étendant sous la partie inférieure du boîtier cylindrique creux, et le siège principal est, de préférence, constitué par l'extrémité d'une jupe s'étendant au-dessus du fond du pot de temporisation. Cependant, toute autre forme de siège pourrait également être utilisée, sans s'écarter du cadre de la présente invention.

La strie longitudinale ménagée dans la surface intérieure du pot de temporisation permet une fuite de fluide à la périphérie du joint à lèvre afin de permettre le retour du clapet principal porté par le piston de temporisation lorsque la pression sur le bouton de commande est relâchée et que le clapet auxiliaire est fermé. La strie longitudinale permet de contrôler la vitesse de déplacement du piston de temporisation dans le pot de temporisation. La vitesse de retour du piston de temporisation est ainsi conditionnée par la vitesse de remplissage du pot de temporisation induite par la section de la strie longitudinale ménagée dans la surface latérale intérieure du pot de temporisation en regard de la lèvre du joint à lèvre.

Selon un premier mode de réalisation de l'invention, le mécanisme à fermeture automatique temporisée possède une forme de cartouche, l'au moins un canal de décompression étant ménagé de manière radiale dans le boîtier cylindrique creux en aval du siège auxiliaire, la sortie de décompression étant reliée à la sortie de fluide du robinet, le pot de temporisation étant disposé directement sous le boîtier cylindrique creux, l'au moins une ouverture d'entrée de fluide étant ménagée sous le pot de temporisation, l'au moins un canal de sortie étant ménagé de manière radiale en aval du siège principal.

Ainsi, dans ce premier mode de réalisation, la cartouche peut être installée dans un corps de robinet dans lequel débouche une arrivée d'eau reliée à l'ouverture d'entrée de fluide de la cartouche et depuis lequel s'étend une sortie d'eau reliée à l'au moins un canal radial de décompression et à l'au moins un canal radial de sortie de la cartouche.

Selon un second mode de réalisation de l'invention, le boîtier cylindrique creux est situé à distance du pot de temporisation, la partie supérieure du pot de temporisation étant reliée de manière fluidique à la partie inférieure du boîtier cylindrique creux à l'aide d'un tuyau, l'au moins un canal de décompression débouchant en partie supérieure du boîtier cylindrique creux, l'au moins une ouverture d'entrée de fluide étant ménagée de manière radiale dans le pot de temporisation, l'au moins un canal de sortie étant ménagé sous le pot de temporisation en aval du siège principal.

Ainsi, dans ce second mode de réalisation, le système de déclenchement du mécanisme, comprenant le boîtier cylindrique creux et la tige de commande, est déporté du reste du mécanisme qui est installé dans un corps de robinet depuis lequel s'étend une arrivée d'eau reliée à l'ouverture radiale d'entrée de fluide du mécanisme et dans lequel débouche une sortie d'eau reliée à l'au moins un canal de sortie du mécanisme.

Dans ce second mode de réalisation, la sortie de décompression est, de préférence, distincte de la sortie de fluide du robinet, la fuite de décompression du mécanisme étant ainsi déportée.

Selon une caractéristique particulière de l'invention, le clapet secondaire et la longueur du plongeur portant ledit clapet secondaire sont configurés pour obturer par étanchéité radiale un alésage situé en aval du siège principal lorsque le piston de temporisation est en position haute.

Ainsi, lorsque le clapet secondaire est fermé, c'est-à-dire lorsque le piston de temporisation est en position haute (après la remontée du piston de temporisation vers la partie supérieure du pot de temporisation sous l'effet de la pression du réseau d'eau amont) et que l'extrémité inférieure du plongeur se trouve à l'intérieur dudit alésage, le clapet secondaire est en contact radial avec la paroi interne dudit alésage de manière à assurer une étanchéité pour empêcher l'eau présente dans le pot de temporisation de s'écouler vers l'au moins un canal de sortie du mécanisme.

Selon une variante de l'invention, le siège secondaire est constitué par un épaulement ménagé entre le siège principal et l'au moins un canal de sortie. Ainsi, dans cette variante, lorsque le clapet secondaire est fermé, c'est-à-dire lorsque le piston de temporisation est en position haute, le clapet secondaire est en contact avec ledit épaulement de manière à assurer une étanchéité pour empêcher l'eau présente dans le pot de temporisation de s'écouler vers l'au moins un canal de sortie du mécanisme.

En outre, dans le cas de cette variante, la hauteur du plongeur permet de définir la durée de temporisation du mécanisme, le plongeur pouvant ainsi être choisi en fonction de la temporisation souhaitée.

Le plongeur est, de préférence, formé d'un seul tenant avec le piston de temporisation, mais pourrait également être fixé sous le piston (par exemple, par vissage), sans s'écarter du cadre de la présente invention.

Selon une caractéristique particulière de l'invention, la surface latérale du plongeur comporte au moins une cannelure configurée pour permettre un passage de fluide depuis le pot de temporisation vers l'au moins un canal de sortie lorsque les clapets principal et secondaire sont ouverts.

Selon une caractéristique particulière de l'invention, la surface latérale de la tige de commande comporte au moins une cannelure configurée pour permettre un passage de fluide depuis le pot de temporisation vers l'au moins un canal de décompression lorsque le clapet auxiliaire est ouvert.

Selon une caractéristique particulière de l'invention, le mécanisme à fermeture automatique temporisée comprend en outre un limiteur de débit constitué par une bague tubulaire en regard de l'un parmi l'au moins une ouverture d'entrée de fluide et l'au moins un canal de sortie, ladite bague tubulaire comprenant des fenêtres de différentes tailles ménagées à la périphérie supérieure de ladite bague pour permettre de limiter le débit de fluide et des cannelures intérieures s'ajustant sur des cannelures extérieures ménagées au niveau de la partie basse du pot de temporisation.

Ainsi, le limiteur de débit permet de régler le débit de fluide à la sortie du robinet. Le limiteur de débit permet ainsi de satisfaire aux exigences des nouvelles réglementations pour les bâtiments à haute qualité environnementale, telles que la certification LEED^{®} (de l'acronyme anglo-saxon, « Leadership in Energy and Environmental Design »).

Le mécanisme permet ainsi de commander l'écoulement d'un flux d'eau pendant une durée prédéterminée et dont le débit est réglable afin de correspondre au mieux aux besoins des utilisateurs et aux lieux où est installé le robinet.

Le limiteur de débit ainsi que le plongeur permettant la fonction antiblocage ne sont accessibles qu'à un technicien de maintenance suite au démontage et à la dépose de la cartouche.

L'installateur adapte le réglage de débit au moment de l'installation du mécanisme. Il pourra éventuellement, au cours d'une maintenance ultérieure, choisir de modifier à sa guise le débit réglé. En outre, l'installateur a la possibilité de supprimer la fonction anti-blocage en retirant le joint torique faisant office de clapet secondaire.

La présente invention a également pour objet un robinet pour douche, lavabo ou urinoir intégrant un mécanisme à fermeture automatique temporisée tel que décrit ci-dessus.

Ainsi, le mécanisme à fermeture automatique temporisée selon la présente invention est installé, de manière amovible et interchangeable (de préférence, par vissage), dans un corps de forme généralement cylindrique du robinet. Pour mieux illustrer l'objet de la présente invention, on va en décrire ci-après, à titre illustratif et non limitatif, deux modes de réalisation préférés, avec référence aux dessins annexés.

Sur ces dessins :
[Fig. 1] est une vue en coupe longitudinale d'un robinet comprenant un mécanisme à fermeture automatique temporisée selon un premier mode de réalisation de la présente invention, dans la position de fermeture du robinet ;
[Fig. 2] est une vue en coupe longitudinale du robinet de la Figure 1 lors d'un appui sur le bouton de commande du robinet ;
[Fig. 3] est une vue en coupe longitudinale du robinet de la Figure 1 lorsque le bouton de commande du robinet est maintenu enfoncé ;
[Fig. 4] est une vue en coupe longitudinale du robinet de la Figure 1 lors d'un relâchement de l'appui sur le bouton de commande du robinet ; et
[Fig. 5] est une vue en coupe longitudinale d'un robinet comprenant un mécanisme à fermeture automatique temporisée selon un second mode de réalisation de la présente invention, dans la position de fermeture du robinet.

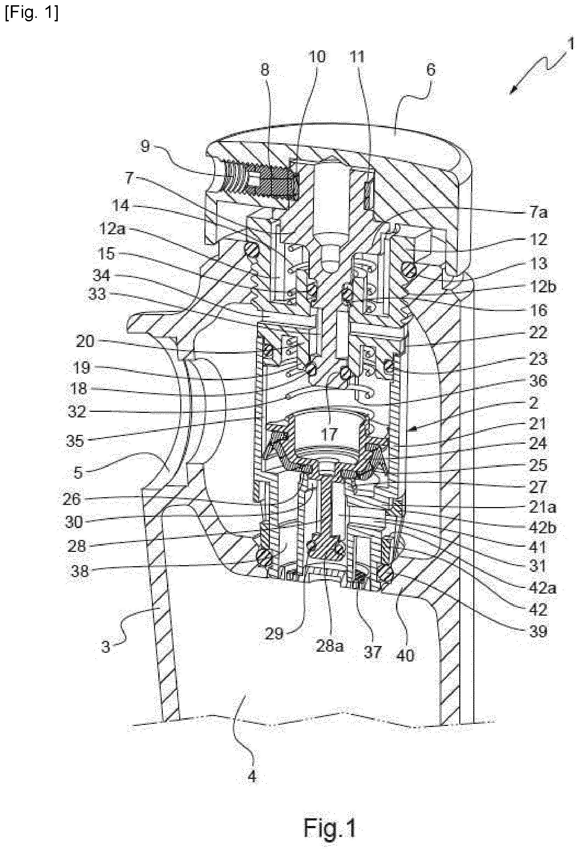

Si l'on se réfère aux Figures 1 à 4, on peut voir qu'il y est représenté un robinet 1, tel qu'un robinet pour douche, lavabo ou urinoir, comprenant un mécanisme à fermeture automatique temporisée sous forme de cartouche 2 selon un premier mode de réalisation de la présente invention.

Le robinet 1 comprend un corps de robinet 3 creux de forme sensiblement cylindrique dans lequel est installée la cartouche 2 de manière amovible et interchangeable.

Une arrivée de fluide 4 débouche dans la partie inférieure du corps de robinet 3, de manière à être en regard du fond de la cartouche 2.

Une sortie de fluide 5 s'étend depuis la partie supérieure du corps de robinet 3. Le robinet 1 comprend en outre un bouton de commande 6 qui est rendu solidaire d'une tige de commande 7 de la cartouche 2. Selon un mode de réalisation, la fixation du bouton de commande 6 à la tige de commande 7 est assurée à l'aide d'une vis radiale de serrage 8 qui pénètre dans un trou fileté radial 9 ménagé dans le bouton de commande 6 et vient en appui contre une bague échancrée 10 qui est maintenue dans une rainure 11 formée au niveau de l'extrémité supérieure de la tige de commande 7. Tout autre moyen de fixation connu de l'homme du métier permettant la fixation du bouton de commande 6 à la tige de commande 7 est envisagé dans le cadre de la présente invention.

La tige de commande 7 est apte à coulisser axialement dans des rainures 12a ménagées à l'intérieur d'un boîtier cylindrique creux 12 rendu solidaire de la partie supérieure du corps de robinet 3 à l'aide d'un filetage 12b formé sur la surface latérale extérieure du boîtier cylindrique creux 12, l'assemblage du corps de robinet 3 et du boîtier cylindrique creux 12 étant rendu étanche à l'aide d'un joint d'étanchéité 13.

Un ressort de compression 14 est disposé entre un épaulement 7a au niveau de l'extrémité supérieure de la tige de commande 7 et le fond du boîtier cylindrique creux 12 de façon à effectuer un rappel automatique de l'ensemble bouton de commande 6 - tige de commande 7 dès que l'appui sur le bouton de commande 6 est relâché.

L'étanchéité entre le boîtier cylindrique creux 12 et la tige de commande 7 est rendue possible à l'aide d'un joint torique 15 disposé dans une gorge 16 formée sur la tige de commande 7.

L'extrémité inférieure de la tige de commande 7 porte, dans une gorge 17, un joint torique 18 faisant office de clapet auxiliaire mais également de retenue mécanique de la tige de commande 7 dans le boîtier cylindrique creux 12. Lorsque l'utilisateur n'appuie pas sur le bouton de commande 6, tel que représenté à la Figure 1, le joint torique 18 faisant office de clapet auxiliaire est en contact avec un siège auxiliaire 19 disposé à l'extrémité inférieure d'une jupe 20 s'étendant axialement sous le boîtier cylindrique creux 12.

Un pot de temporisation 21 est disposé de façon concentrique sous le boîtier cylindrique creux 12, ledit pot de temporisation 21 coopérant avec le boîtier cylindrique creux 12 à l'aide d'un système de crabots 22, un joint d'étanchéité 23 étant est disposé entre le boîtier cylindrique creux 12 et le pot de temporisation 21 de façon à maintenir étanche la partie supérieure du pot de temporisation 21.

Un piston de temporisation 24 est disposé dans le pot de temporisation 21, et est apte à coulisser axialement dans ce dernier, ledit piston de temporisation 21 portant un joint à lèvre 25 dont la lèvre s'applique contre la surface latérale intérieure du pot de temporisation 21, la partie inférieure plate du joint à lèvre 25 remplissant également la fonction de clapet principal en regard d'un siège principal 26 situé à l'extrémité supérieure d'une jupe 27 s'étendant axialement au-dessus du fond du pot de temporisation 21.

Le piston de temporisation 24 porte axialement, sous celui-ci, un plongeur 28 qui traverse le siège principal 26, ledit plongeur 28 portant, dans une gorge 28a ménagée au niveau de son extrémité inférieure, un joint torique 29 faisant office de clapet secondaire apte à coopérer avec un alésage 30, faisant office de siège secondaire, situé entre le siège principal 26 et au moins un canal radial de sortie de fluide 31 débouchant dans la partie supérieure du corps de robinet 3 au niveau de la sortie de fluide 5 du robinet 1. Préférablement, le clapet secondaire est configuré pour être fermé par étanchéité radiale lorsque le joint torique 29 se retrouve dans l'alésage 30.

Le plongeur 28 est formé d'un seul tenant avec le piston de temporisation 24, mais pourrait également être fixé sous le piston de temporisation 24 (par exemple, par vissage), sans s'écarter du cadre de la présente invention.

Il est à noter que le siège secondaire pourrait également être constitué par un épaulement ménagé entre le siège principal 26 et le canal radial de sortie 31, la longueur du plongeur 28 étant, dans ce cas, inférieure à la course du piston de temporisation 24 dans le pot de temporisation 21 et permettant de définir la durée de temporisation de la cartouche 2, sans s'écarter du cadre de la présente invention.

Un ressort de compression 32 est disposé entre le piston de temporisation 24 et le boîtier cylindrique creux 12 de manière à ramener l'ensemble mobile piston de temporisation 24 - joint à lèvre 25 vers le siège principal 19 lorsque l'appui sur le bouton de commande 6 est relâché.

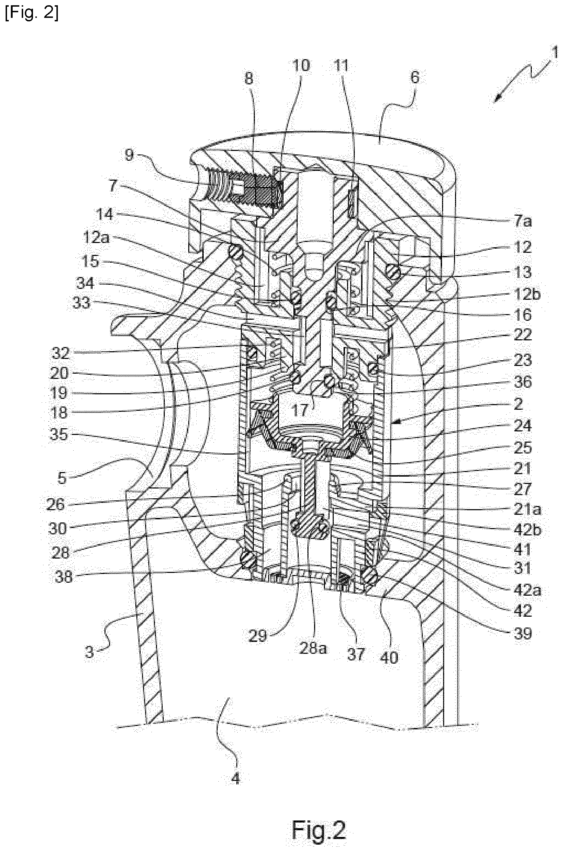

La tige de commande 7 comporte au-dessus du clapet auxiliaire 18 des cannelures 33 qui communiquent, d'une part, avec la sortie de fluide 5 du robinet 1 par l'intermédiaire de canaux radiaux de décompression 34 ménagés dans le boîtier cylindrique creux 12 et, d'autre part, avec la partie supérieure du pot de temporisation 21 lorsqu'un appui sur le bouton de commande 6 est appliqué et que le clapet auxiliaire 18 s'ouvre, tel que représenté à la Figure 2. L'établissement de ce passage hydraulique entraîne, par décompression, la remontée de l'ensemble mobile piston de temporisation 24 - joint à lèvre 25, tout en comprimant le ressort de compression 32 sous l'effet de la pression amont du fluide en provenance de l'arrivée de fluide 4, tel que représenté à la Figure 2.

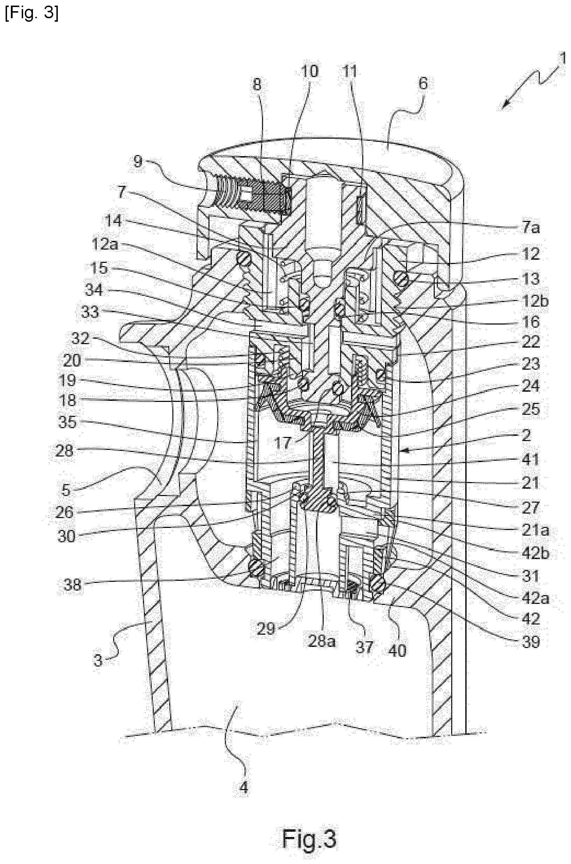

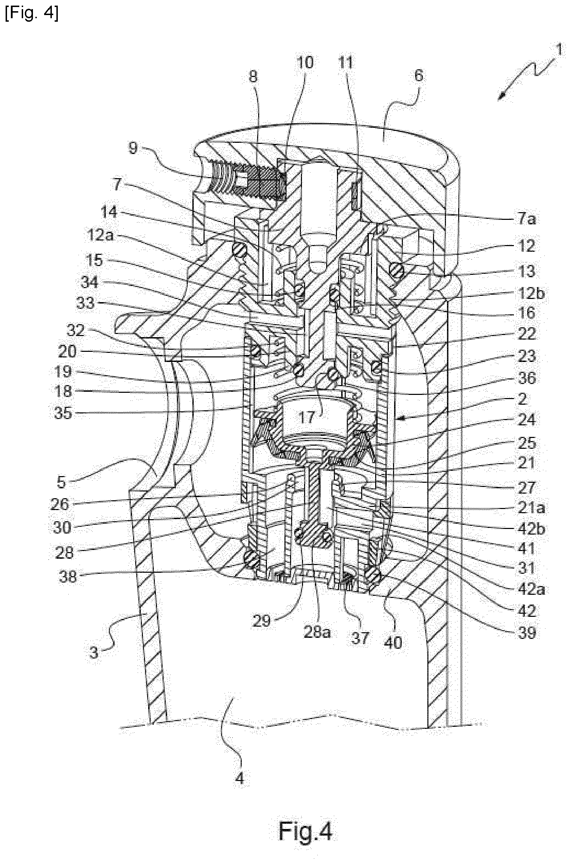

Le clapet secondaire 29 ne se ferme que lorsque le piston de temporisation 24 vient interagir avec l'extrémité inférieure du boîtier cylindrique creux 12 suite à un appui ininterrompu par l'utilisateur sur le bouton de commande 6, tel que représenté à la Figure 3, empêchant ainsi un écoulement jugé préjudiciable. Une fois le bouton de commande 6 relâché, tel que représenté à la Figure 4, le clapet auxiliaire 18 revient en appui sur le siège auxiliaire 19, et l'ensemble mobile piston de temporisation 24 - joint à lèvre 25 redescend lentement sous la poussée du ressort de compression 32 du fait de l'existence d'une strie longitudinale 35 qui est ménagée dans la surface latérale interne du pot de temporisation 21 et qui permet l'émergence d'une fuite de fluide calibrée au niveau de la lèvre du joint à lèvre 25.

Préférablement, une strie supplémentaire 36 est en outre ménagée en partie supérieure de la surface latérale interne du pot de temporisation 21 de façon à permettre une descente plus rapide du piston de temporisation 24 dès que la poussée sur le bouton de commande 6 est relâchée.

Tel que représenté à la Figure 4, la descente du piston de temporisation 24 permet l'ouverture du clapet secondaire 29 et, par voie de conséquence, l'écoulement libre du fluide par l'alésage 30 depuis l'arrivée de fluide 4 du robinet 1 vers sa sortie de fluide 5, l'eau arrivant sous le pot de temporisation 21 de la cartouche 2 étant contrainte de passer à travers un filtre de type grille 37 puis s'écoulant vers l'intérieur du pot de temporisation 21 par l'intermédiaire d'une ouverture d'entrée de fluide 38 ménagée dans la partie inférieure du pot de temporisation 21.

Un joint torique 39, disposé au niveau d'une collerette 40 formée à l'intérieur du corps de robinet 3, permet d'assurer l'étanchéité entre le pot de temporisation 21 et le corps de robinet 3, prévenant ainsi toute communication hydraulique entre l'arrivée de fluide 4 et la sortie de fluide 5 du robinet 1.

Lorsque le clapet principal 25 et le clapet secondaire 29 sont ouverts, comme représenté à la Figure 4, le passage de l'eau par le siège principal 26 puis par l'alésage 30 permet ensuite à l'eau de s'écouler dans des cannelures 41 ménagées dans le plongeur 28 en amont du clapet secondaire 29, puis dans le canal radial de sortie 31 qui débouche sur une bague tubulaire de réglage de débit 42 ajustée par serrage sur la partie inférieure du pot de temporisation 21. La bague tubulaire de réglage de débit 42 comprend des fenêtres 42a de différentes tailles ménagées à la périphérie supérieure de ladite bague 42 pour permettre de limiter le débit du fluide sortant du canal radial de sortie 31 et des cannelures intérieures 42b s'ajustant sur des cannelures extérieures 21a ménagées au niveau de la partie basse du pot de temporisation 21.

Ainsi, un installateur peut régler le débit de sortie du robinet 1, avant l'installation de la cartouche 2 dans le corps de robinet 3, en disposant le canal radial de sortie 31 de la cartouche 2 en regard de l'une des fenêtres de la bague tubulaire 42 avec une taille appropriée au débit souhaité.

Les différentes étapes de fonctionnement du robinet 1, représentées aux Figures 1 à 4, vont maintenant être décrites.

A la Figure 1, aucun appui n'est exercé sur le bouton de commande 6 du robinet 1, la cartouche 2 du robinet 1 est donc au repos. Le piston de temporisation 24 est en position basse dans le pot de temporisation 21, le clapet principal étant ainsi fermé (surface inférieure du joint à lèvre 25 en butée contre le siège principal 26). En outre, la tige de commande 7 étant en position haute, le clapet auxiliaire 18 est également fermé dans la position de repos, de telle sorte qu'aucun écoulement d'eau ne se produit vers le canal radial de sortie 31 et vers les canaux radiaux de décompression 34. Aucun écoulement d'eau ne sort donc de la sortie de fluide 5 du robinet 1.

A la Figure 2, un appui est exercé sur le bouton de commande 6 du robinet 1, la tige de commande 7 descend alors, ce qui ouvre le clapet auxiliaire 18. Une chute de pression est alors créée dans le pot de temporisation 21, ce qui provoque une fuite d'amorçage vers les canaux radiaux de décompression 34 puis vers la sortie de fluide 5 du robinet 1. La décompression créée dans le pot de temporisation 21 entraîne ainsi la montée du piston de temporisation 24 dans le pot de temporisation 21 du fait de la pression du fluide dans la partie inférieure du pot de temporisation 21, et provoque ainsi l'ouverture du clapet principal 25. Un bref écoulement d'eau a alors lieu à travers le canal radial de sortie 31 lors de la remontée du piston de temporisation 24 dans le pot de temporisation 21.

A la Figure 3, le bouton de commande 6 du robinet 1 est maintenu enfoncé par l'utilisateur. Le clapet auxiliaire 18 reste ainsi ouvert. En fin de course ascendante du piston de temporisation 24, le clapet secondaire 29 se retrouve à l'intérieur de l'alésage 30, ce qui permet d'assurer une étanchéité radiale dans l'alésage 30 afin d'interrompre l'écoulement d'eau depuis le pot de temporisation 21 vers le canal radial de sortie 31.

A la Figure 4, l'appui sur le bouton de commande 6 est relâché, la tige de commande 7 remonte alors sous l'effet du ressort de compression 14, et le clapet auxiliaire 18 se referme, ce qui provoque la descente du piston de temporisation 24 dans le pot de temporisation 21 sous l'effet du ressort de compression 32 et donc l'ouverture du clapet secondaire 29. L'eau provenant de l'ouverture d'entrée de fluide 38 peut alors librement s'écouler par l'alésage 30 vers l'au moins un canal radial de sortie 31 puis vers la sortie de fluide 5 du robinet 1 pendant une durée prédéterminée, à savoir la durée de la course de retour du piston de temporisation 24 dans le pot de temporisation 21.

A la fin de la course de retour du piston de temporisation 24, la cartouche 2 revient alors dans sa position de repos telle que représentée à la Figure 1.

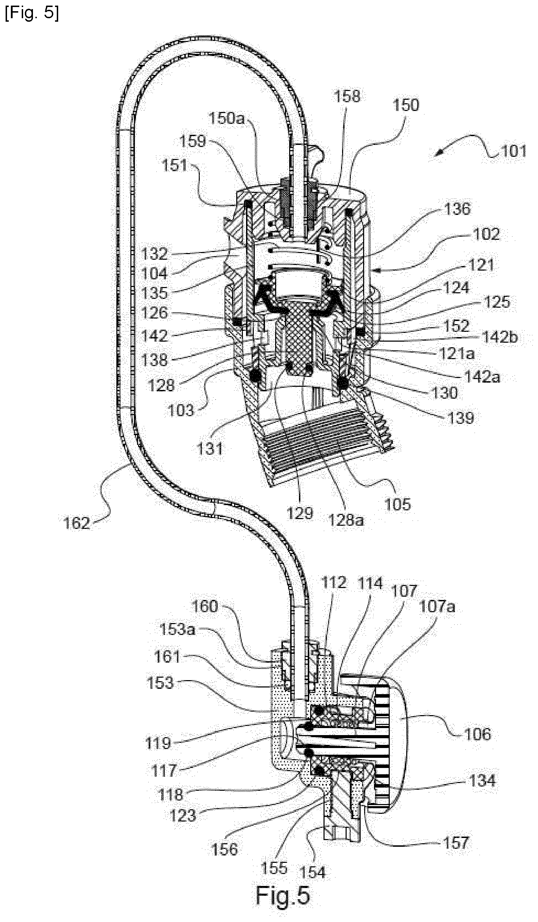

Si l'on se réfère à la Figure 5, on peut voir qu'il y est représenté un robinet 101, tel qu'un robinet pour douche, lavabo ou urinoir, comprenant un mécanisme à fermeture automatique temporisée 102 selon un second mode de réalisation de la présente invention.

Les éléments communs entre le premier mode de réalisation de l'invention sur les Figures 1 à 4 et ce second mode de réalisation de l'invention portent le même chiffre de référence auquel on a ajouté 100 et ne seront pas décrits plus en détail ici lorsqu'ils sont de structures identiques.

Dans ce second mode de réalisation, le système de déclenchement du mécanisme 102 (comprenant, entre autres, le boîtier cylindrique creux 112 et la tige de commande 107) est déporté du reste du mécanisme 102 qui est installé dans le corps de robinet 103.

Un premier chapeau 150 est disposé au-dessus du pot de temporisation 121, la partie inférieure dudit premier chapeau 150 reposant dans la partie supérieure du corps de robinet 103. Un joint d'étanchéité 151 est disposé entre le premier chapeau 150 et le pot de temporisation 121, et un joint d'étanchéité 152 est disposé entre le premier chapeau 150 et le corps de robinet 103. Le ressort de compression 132 est disposé entre le piston de temporisation 124 et le premier chapeau 150.

La sortie d'eau 105 du robinet 101 débouche dans la partie inférieure du corps de robinet 103, et l'arrivée d'eau 104 du robinet 101 s'étend depuis la surface latérale du chapeau 150. Préférablement, la sortie d'eau 105 est filetée.

Le bouton de commande 106 et la tige de commande 107 sont formés d'un seul tenant.

Le boîtier cylindrique creux 112 est disposé à l'intérieur d'un second chapeau 153 situé à distance du premier chapeau 150, le joint d'étanchéité 123 étant disposé entre le boîtier cylindrique creux 112 et le second chapeau 153.

La fixation du second chapeau 153 au boîtier cylindrique creux 112 est assurée à l'aide d'une vis radiale de serrage 154 qui pénètre dans un trou fileté radial 155 ménagé dans le second chapeau 153 et vient en appui dans une rainure 156 formée dans la surface latérale du boîtier cylindrique creux 112. Tout autre moyen de fixation connu de l'homme du métier permettant la fixation du second chapeau 153 au boîtier cylindrique creux 112 est envisagé dans le cadre de la présente invention.

Le canal de décompression 134 débouche en partie supérieure du boîtier cylindrique creux 112 pour permettre un écoulement de fluide vers une sortie de décompression 157 ménagée entre la partie supérieure du boîtier cylindrique creux 112 et le bouton de commande 106. Ainsi, dans ce second mode de réalisation, la sortie de décompression 157 est distincte de la sortie de fluide 105 du robinet 101.

La partie supérieure du premier chapeau 150 possède un alésage 150a qui débouche dans le pot de temporisation 121 et dans lequel est disposé un premier cylindre de retenue d'extrémité de tuyau 158, un joint d'étanchéité 159 étant disposé entre le premier cylindre de retenue d'extrémité de tuyau 158 et le premier chapeau 150.

Le second chapeau 153 possède également un alésage 153a qui débouche au niveau de la partie inférieure de la tige de commande 107 et dans lequel est disposé un second cylindre de retenue d'extrémité de tuyau 160, un joint d'étanchéité 161 étant disposé entre le second cylindre de retenue d'extrémité de tuyau 160 et le second chapeau 153.

Un tuyau flexible 162 permet de relier de manière fluidique la partie supérieure du pot de temporisation 121 à la partie inférieure du boîtier cylindrique creux 112, l'une des extrémités du tuyau flexible 162 étant insérée dans le premier cylindre 158 et l'autre des extrémités du tuyau flexible 162 étant insérée dans le second cylindre 160.

Le canal de sortie 131 du mécanisme 102 débouche dans la partie inférieure du corps de robinet 103 au niveau de sa sortie de fluide 105.

L'au moins une ouverture d'entrée de fluide 138 est ménagée de manière radiale dans la partie inférieure du pot de temporisation 121, la bague tubulaire de réglage de débit 142 étant disposée en regard de l'au moins une ouverture d'entrée de fluide radiale 138.

Lorsqu'aucun appui n'est exercé sur le bouton de commande 106 tel que représenté à la Figure 5, le mécanisme 102 du robinet 101 est au repos, le piston de temporisation 124 est en position basse dans le pot de temporisation 121 et le clapet principal est fermé. En outre, la tige de commande 107 n'étant pas enfoncée, le clapet auxiliaire 118 est également fermé, de telle sorte qu'aucun écoulement d'eau ne se produit vers le canal de sortie 131 et vers le canal de décompression 134.

Lorsqu'un appui est exercé sur le bouton de commande 106, la tige de commande 107 s'enfonce alors, ce qui ouvre le clapet auxiliaire 118. Une chute de pression est alors créée dans le pot de temporisation 121, ce qui provoque une fuite d'amorçage vers le canal de décompression 134 (par l'intermédiaire du tuyau flexible 162) puis vers la sortie de décompression 157. La décompression créée dans le pot de temporisation 121 entraîne ainsi la montée du piston de temporisation 124 dans le pot de temporisation 121 et provoque l'ouverture du clapet principal 125. Un bref écoulement d'eau a alors lieu à travers le canal de sortie 131 lors de la remontée du piston de temporisation 124 dans le pot de temporisation 121.

Lorsque le bouton de commande 106 est maintenu enfoncé par l'utilisateur, le clapet auxiliaire 118 reste ouvert. En fin de course ascendante du piston de temporisation 124, le clapet secondaire 129 se retrouve à l'intérieur de l'alésage 130, ce qui permet d'interrompre l'écoulement d'eau depuis le pot de temporisation 121 vers le canal de sortie 131.

Lorsque l'appui sur le bouton de commande 106 est relâché, la tige de commande 107 revient à sa position non enfoncée sous l'effet du ressort de compression 114, et le clapet auxiliaire 118 se referme, ce qui provoque la descente du piston de temporisation 124 dans le pot de temporisation 121 sous l'effet du ressort de compression 132 et donc l'ouverture du clapet secondaire 129. L'eau provenant de l'ouverture d'entrée de fluide 138 (en provenance de l'arrivée d'eau 104 du robinet 101) peut alors librement s'écouler par l'alésage 130 vers le canal de sortie 131 puis vers la sortie de fluide 105 du robinet 101 pendant une durée prédéterminée, à savoir la durée de la course de retour du piston de temporisation 124 dans le pot de temporisation 121.

Il est bien entendu que les modes de réalisation particuliers qui viennent d'être décrits ont été donnés à titre indicatif et non limitatif, et que des modifications peuvent être apportées sans que l'on s'écarte pour autant de la présente invention qui n'est limité que par la portée des revendications.

## Revendications

1. - Mécanisme à fermeture automatique temporisée (2 ; 102) pour un robinet (1 ; 101), tel qu'un robinet pour douche, lavabo ou urinoir, qui comprend :
- un boîtier cylindrique creux (12 ; 112) à l'intérieur duquel est apte à coulisser axialement une tige de commande (7 ; 107), l'extrémité supérieure de la tige de commande (7 ; 107) étant configurée pour être solidaire d'un bouton de commande de robinet (6 ; 106), la partie inférieure du boîtier cylindrique creux (12 ; 112) constituant un siège auxiliaire (19 ; 119), l'extrémité inférieure de la tige de commande (7 ; 107) portant un clapet auxiliaire (18 ; 118) associé audit siège auxiliaire (19 ; 119), le retour du clapet auxiliaire (18 ; 118) sur son siège auxiliaire (19 ; 119) étant provoqué par un premier ressort de compression (14 ; 114), au moins un canal de décompression (34 ; 134) étant ménagé dans le boîtier cylindrique creux (12 ; 112) en aval du siège auxiliaire (19 ; 119) pour permettre un écoulement de fluide vers une sortie de décompression (5 ; 157) lorsque le clapet auxiliaire (18 ; 118) est ouvert ;
- un pot de temporisation (21 ; 121) dont la partie supérieure est reliée de manière fluidique à la partie inférieure du boîtier cylindrique creux (12 ; 112) et dans lequel peut coulisser un piston de temporisation (24 ; 124) qui porte un clapet principal (25 ; 125) associé à un siège principal (26 ; 126) ménagé au fond du pot de temporisation (21 ; 121), ledit pot de temporisation (21 ; 121) étant configuré pour être relié à une arrivée de fluide (4 ; 104) du robinet (1 ; 101) par l'intermédiaire d'au moins une ouverture d'entrée de fluide (38 ; 138) ménagée dans le pot de temporisation (21 ; 121), ledit clapet principal (25 ; 125) étant solidaire d'un joint à lèvre dont la lèvre s'applique sur la surface latérale intérieure du pot de temporisation (21 ; 121), la surface latérale intérieure du pot de temporisation (21 ; 121) comportant une strie longitudinale (35 ; 135) pour permettre une fuite de fluide calibrée entre la partie du pot de temporisation (21 ; 121) au-dessus du joint à lèvre et la partie du pot de temporisation (21 ; 121) au-dessous du joint à lèvre lors du déplacement du piston de temporisation (24 ; 124), le retour du clapet principal (25 ; 125) sur son siège principal (26 ; 126) étant provoqué par un second ressort de compression (32 ; 132) et étant ralenti par le joint à lèvre en fonction de la section de ladite strie longitudinale (35 ; 135) ;
- au moins un canal de sortie (31 ; 131) ménagé en aval du siège principal (26 ; 126) et permettant un écoulement de fluide vers une sortie de fluide (5 ; 105) du robinet (1 ; 101) ; et **caractérisé par le fait qu'**il comprend
- un clapet secondaire (29 ; 129) porté par l'extrémité inférieure d'un plongeur (28 ; 128) solidaire du piston de temporisation (24 ; 124), ledit plongeur (28 ; 128) pénétrant dans le siège principal (26 ; 126), un siège secondaire associé audit clapet secondaire (29 ; 129) étant ménagé entre le siège principal (26 ; 126) et l'au moins un canal de sortie (31 ; 131).

2. - Mécanisme à fermeture automatique temporisée (2) selon la revendication 1, **caractérisé par le fait que** le mécanisme à fermeture automatique temporisée (2) possède une forme de cartouche, l'au moins un canal de décompression (34) étant ménagé de manière radiale dans le boîtier cylindrique creux (12) en aval du siège auxiliaire (19), la sortie de décompression étant reliée à la sortie de fluide (5) du robinet (1), le pot de temporisation (21) étant disposé directement sous le boîtier cylindrique creux (12), l'au moins une ouverture d'entrée de fluide (38) étant ménagée sous le pot de temporisation (21), l'au moins un canal de sortie (31) étant ménagé de manière radiale en aval du siège principal (26).

3. - Mécanisme à fermeture automatique temporisée (102) selon la revendication 1, **caractérisé par le fait que** le boîtier cylindrique creux (112) est situé à distance du pot de temporisation (121), la partie supérieure du pot de temporisation (121) étant reliée de manière fluidique à la partie inférieure du boîtier cylindrique creux (112) à l'aide d'un tuyau (162), l'au moins un canal de décompression (134) débouchant en partie supérieure du boîtier cylindrique creux (112), l'au moins une ouverture d'entrée de fluide (138) étant ménagée de manière radiale dans le pot de temporisation (121), l'au moins un canal de sortie (131) étant ménagé sous le pot de temporisation (121) en aval du siège principal (126).

4. - Mécanisme à fermeture automatique temporisée (2 ; 102) selon l'une des revendications 1 à 3, **caractérisé par le fait que** le clapet secondaire (29 ; 129) et la longueur du plongeur (28 ; 128) portant ledit clapet secondaire (29 ; 129) sont configurés pour obturer par étanchéité radiale un alésage (30 ; 130) situé en aval du siège principal (26 ; 126) lorsque le piston de temporisation (24 ; 124) est en position haute.

5. - Mécanisme à fermeture automatique temporisée (2 ; 102) selon l'une des revendications 1 à 3, **caractérisé par le fait que** le siège secondaire est constitué par un épaulement ménagé entre le siège principal (26 ; 126) et l'au moins un canal de sortie (31 ; 131).

6. - Mécanisme à fermeture automatique temporisée (2 ; 102) selon l'une des revendications 1 à 5, **caractérisé par le fait que** la surface latérale du plongeur (28 ; 128) comporte au moins une cannelure (41) configurée pour permettre un passage de fluide depuis le pot de temporisation (21 ; 121) vers l'au moins un canal de sortie (31 ; 131) lorsque les clapets principal (25 ; 125) et secondaire (29 ; 129) sont ouverts.

7. - Mécanisme à fermeture automatique temporisée (2 ; 102) selon l'une des revendications 1 à 6, **caractérisé par le fait que** la surface latérale de la tige de commande (7 ; 107) comporte au moins une cannelure (33) configurée pour permettre un passage de fluide depuis le pot de temporisation (21 ; 121) vers l'au moins un canal de décompression (34 ; 134) lorsque le clapet auxiliaire (18 ; 118) est ouvert.

8. - Mécanisme à fermeture automatique temporisée (2 ; 102) selon l'une des revendications 1 à 7, **caractérisé par le fait qu'**il comprend en outre un limiteur de débit constitué par une bague tubulaire (42 ; 142) en regard de l'un parmi l'au moins une ouverture d'entrée de fluide (38 ; 138) et l'au moins un canal de sortie (31 ; 131), ladite bague tubulaire (42 ; 142) comprenant des fenêtres (42a ; 142a) de différentes tailles ménagées à la périphérie supérieure de ladite bague (42 ; 142) pour permettre de limiter le débit de fluide et des cannelures intérieures (42b ; 142b) s'ajustant sur des cannelures extérieures (21a ; 121a) ménagées au niveau de la partie basse du pot de temporisation (21 ; 121).

9. - Robinet (1 ; 101) pour douche, lavabo ou urinoir intégrant un mécanisme à fermeture automatique temporisée (2 ; 102) selon l'une des revendications 1 à 8.

## Patentansprüche

1. - Mechanismus mit zeitgesteuertem automatischem Verschluss (2; 102) für einen Hahn (1; 101) wie ein Hahn für eine Dusche, ein Waschbecken oder ein Pissoir, der umfasst:
- ein hohles zylindrisches Gehäuse (12; 112), in dessen Inneren eine Steuerstange (7; 107) imstande ist, axial zu gleiten, wobei das obere Ende der Steuerstange (7; 107) ausgelegt ist, um mit einem Hahnsteuerknopf (6; 106) fest verbunden zu sein, wobei der untere Teil des hohlen zylindrischen Gehäuses (12; 112) einen Hilfssitz (19; 119) bildet, wobei das untere Ende der Steuerstange (7; 107) ein dem Hilfssitz (19; 119) zugeordnetes Hilfsventil (18; 118) trägt, wobei die Rückkehr des Hilfsventils (18; 118) auf seinen Hilfssitz (19; 119) von einer ersten Kompressionsfeder (14; 114) bewirkt wird, wobei mindestens ein Druckminderungskanal (34; 134) in dem hohlen zylindrischen Gehäuse (12; 112) dem Hilfssitz (19; 119) nachgelagert eingerichtet ist, um ein Fließen von Fluid zu einem Druckminderungsausgang (5; 157) zu erlauben, wenn das Hilfsventil (18; 118) geöffnet ist;
- ein Timerkästchen (21; 121), dessen oberer Teil mit dem unteren Teil des hohlen zylindrischen Gehäuses (12; 112) fluidisch verbunden ist und in dem ein Timerkolben (24; 124) gleiten kann, der ein Hauptventil (25; 125) trägt, das einem auf dem Boden des Timerkästchens (21; 121) eingerichteten Hauptsitz (26; 126) zugeordnet ist, wobei das Timerkästchen (21; 121) ausgelegt ist, um mit einem Fluidzulauf (4; 104) des Hahns (1; 101) über mindestens eine im Timerkästchen (21; 121) eingerichtete Fluideinlassöffnung (38; 138) verbunden zu sein, wobei das Hauptventil (25; 125) mit einer Lippendichtung fest verbunden ist, deren Lippe auf der inneren seitlichen Oberfläche des Timerkästchens (21; 121) anliegt, wobei die innere seitliche Oberfläche des Timerkästchens (21; 121) eine Längsrille (35; 135) aufweist, um einen kalibrierten Fluidaustritt zwischen dem Teil des Timerkästchens (21; 121) oberhalb der Lippendichtung und dem Teil des Timerkästchen (21; 121) unterhalb der Lippendichtung bei der Verlagerung des Timerkolbens (24; 124) zu erlauben, wobei die Rückkehr des Hauptventils (25; 125) auf seinen Hauptsitz (26; 126) von einer zweiten Kompressionsfeder (32; 132) bewirkt wird und von der Lippendichtung in Abhängigkeit vom Querschnitt der Längsrille (35; 135) verlangsamt wird;
- mindestens einen Ausgangskanal (31; 131), der dem Hauptsitz (26; 126) nachgelagert eingerichtet ist und ein Fließen von Fluid zu einem Fluidausgang (5; 105) des Hahns (1; 101) erlaubt; und **dadurch gekennzeichnet, dass** er umfasst
- ein sekundäres Ventil (29; 129), das von dem unteren Ende eines Tauchkolbens (28; 128) getragen wird, der mit dem Timerkolben (24; 124) fest verbunden ist, wobei der Tauchkolben (28; 128) in den Hauptsitz (26; 126) eindringt, wobei ein dem sekundären Ventil (29; 129) zugeordneter sekundärer Sitz zwischen dem Hauptsitz (26; 126) und dem mindestens einen Ausgangskanal (31; 131) eingerichtet ist.

2. - Mechanismus mit zeitgesteuertem automatischem Verschluss (2) nach Anspruch 1, **dadurch gekennzeichnet, dass** der Mechanismus mit zeitgesteuertem automatischem Verschluss (2) eine Kartuschenform besitzt, wobei der mindestens eine Druckminderungskanal (34) in dem hohlen zylindrischen Gehäuse (12) dem Hilfssitz (19) nachgelagert radial eingerichtet ist, wobei der Druckminderungsausgang mit dem Fluidausgang (5) des Hahns (1) verbunden ist, wobei das Timerkästchen (21) direkt unter dem hohlen zylindrischen Gehäuse (12) angeordnet ist, wobei die mindestens eine Fluideinlassöffnung (38) unter dem Timerkästchen (21) eingerichtet ist, wobei der mindestens eine Ausgangskanal (31) dem Hauptsitz (26) radial nachgelagert eingerichtet ist.

3. - Mechanismus mit zeitgesteuertem automatischem Verschluss (102) nach Anspruch 1, **dadurch gekennzeichnet, dass** sich das hohle zylindrische Gehäuse (112) vom Timerkästchen (121) beabstandet befindet, wobei der obere Teil des Timerkästchens (121) mit dem unteren Teil des hohlen zylindrischen Gehäuses (112) mit Hilfe eines Rohrs (162) fluidisch verbunden ist, wobei der mindestens eine Druckminderungskanal (134) im oberen Teil des hohlen zylindrischen Gehäuses (112) ausmündet, wobei die mindestens eine Fluideinlassöffnung (138) radial im Timerkästchen (121) eingerichtet ist, wobei der mindestens eine Ausgangskanal (131) unter dem Timerkästchen (121) dem Hauptsitz (126) nachgelagert eingerichtet ist.

4. - Mechanismus mit zeitgesteuertem automatischem Verschluss (2; 102) nach einem der Ansprüche 1 bis 3, **dadurch gekennzeichnet, dass** das sekundäre Ventil (29; 129) und die Länge des Tauchkolbens (28; 128), der das sekundäre Ventil (29; 129) trägt, ausgelegt sind, um eine Bohrung (30; 130), die sich dem Hauptsitz (26; 126) nachgelagert befindet, durch radiale Dichtigkeit zu verschließen, wenn der Timerkolben (24; 124) in hoher Position ist.

5. - Mechanismus mit zeitgesteuertem automatischem Verschluss (2; 102) nach einem der Ansprüche 1 bis 3, **dadurch gekennzeichnet, dass** der sekundäre Sitz aus einem Absatz besteht, der zwischen dem Hauptsitz (26; 126) und dem mindestens einen Ausgangskanal (31; 131) eingerichtet ist.

6. - Mechanismus mit zeitgesteuertem automatischem Verschluss (2; 102) nach einem der Ansprüche 1 bis 5, **dadurch gekennzeichnet, dass** die seitliche Oberfläche des Tauchkolbens (28; 128) mindestens eine Rille (41) aufweist, die eingerichtet ist, um einen Fluiddurchgang ab dem Timerkästchen (21; 121) zu dem mindestens einen Ausgangskanal (31; 131) zu erlauben, wenn das Haupt- (25; 125) und das sekundäre Ventil (29; 129) geöffnet sind.

7. - Mechanismus mit zeitgesteuertem automatischem Verschluss (2; 102) nach einem der Ansprüche 1 bis 6, **dadurch gekennzeichnet, dass** die seitliche Oberfläche der Steuerstange (7; 107) mindestens eine Rille (33) aufweist, die ausgelegt ist, um einen Fluiddurchgang ab dem Timerkästchen (21; 121) zu dem mindestens einen Druckminderungskanal (34; 134) zu erlauben, wenn das Hilfsventil (18; 118) geöffnet ist.

8. - Mechanismus mit zeitgesteuertem automatischem Verschluss (2; 102) nach einem der Ansprüche 1 bis 7, **dadurch gekennzeichnet, dass** er ferner einen Durchflussbegrenzer umfasst, der aus einem entweder der mindestens einen Fluideinlassöffnung (38; 138) oder dem mindestens einen Ausgangskanal (31; 131) zugewandten rohrförmigen Ring (42; 142) besteht, wobei der rohrförmige Ring (42; 142) Fenster (42a; 142a) in verschiedenen Größen umfasst, die auf der oberen Peripherie des Rings (42; 142) eingerichtet sind, um eine Begrenzung des Fluiddurchflusses zu erlauben und innere Rillen (42b; 142b), die an äußere Rillen (21a; 121a) angepasst sind, die im Bereich des unteren Teils des Timerkästchens (21; 121) eingerichtet sind.

9. - Hahn (1; 101) für eine Dusche, ein Waschbecken oder ein Pissoir, der einen Mechanismus mit zeitgesteuertem automatischem Verschluss (2; 102) nach einem der Ansprüche 1 bis 8 integriert.

## Claims

1. - A timed automatic closing mechanism (2; 102) for a tap (1; 101), such as a tap for a shower, washbasin or urinal, which comprises :
- a hollow cylindrical housing (12; 112) in which a control rod (7; 107) is axially slidable, the upper end of the control rod (7; 107) being configured to be integral with a tap control knob (6; 106), the lower part of the hollow cylindrical housing (12; 112) constituting an auxiliary seat (19; 119), the lower end of the control rod (7; 107) carrying an auxiliary valve (18; 118) associated with said auxiliary seat (19; 119), the return of the auxiliary valve (18; 118) onto its auxiliary seat (19; 119) being caused by a first compression spring (14; 114), at least one pressure relief channel (34; 134) being provided in the hollow cylindrical housing (12; 112) downstream of the auxiliary seat (19; 119) to allow a fluid flow to a pressure relief outlet (5; 157) when the auxiliary valve (18; 118) is open;
- a timing cylindrical chamber (21; 121) whose upper part is fluidly connected to the lower part of the hollow cylindrical housing (12; 112) and in which a timing piston (24; 124) is slidable, which carries a main valve (25; 125) associated with a main seat (26; 126) provided at the bottom of the timing cylindrical chamber (21; 121), said timing cylindrical chamber (21; 121) being configured to be connected to a fluid inlet (4; 104) of the tap (1; 101) via at least one fluid inlet opening (38; 138) provided in the timing cylindrical chamber (21; 121), said main valve (25; 125) being integral with a lip seal whose lip rests on the inner side surface of the timing cylindrical chamber (21; 121), the inner side surface of the timing cylindrical chamber (21; 121) comprising a longitudinal groove (35; 135) to allow a calibrated fluid leakage between the portion of the timing cylindrical chamber (21; 121) above the lip seal and the portion of the timing cylindrical chamber (21; 121) below the lip seal upon movement of the timing piston (24; 124), the return of the main valve (25; 125) to its main seat (26; 126) being caused by a second compression spring (32; 132) and being slowed down by the lip seal in accordance with the cross-sectional area of said longitudinal groove (35; 135);
- at least one outlet channel (31; 131) provided downstream of the main seat (26; 126) and allowing a fluid flow to a fluid outlet (5; 105) of the tap (1; 101); and **characterized in that** it comprises :
- a secondary valve (29; 129) carried by the lower end of a plunger (28; 128) integral with the timing piston (24; 124), said plunger (28; 128) penetrating into the main seat (26; 126), a secondary seat associated with said secondary valve (29; 129) being provided between the main seat (26; 126) and the at least one outlet channel (31; 131).

2. - The timed automatic closing mechanism (2) according to claim 1, **characterized in that** the timed automatic closing mechanism (2) is cartridge-shaped, the at least one pressure relief channel (34) being radially provided in the hollow cylindrical housing (12) downstream of the auxiliary seat (19), the pressure relief outlet being connected to the fluid outlet (5) of the tap (1), the timing cylindrical chamber (21) being arranged directly below the hollow cylindrical housing (12), the at least one fluid inlet opening (38) being arranged below the timing cylindrical chamber (21), the at least one outlet channel (31) being arranged radially downstream of the main seat (26).

3. - The timed automatic closing mechanism (102) according to claim 1, **characterized in that** the hollow cylindrical housing (112) is located at a distance from the timing cylindrical chamber (121), the upper part of the timing cylindrical chamber (121) being fluidically connected to the lower part of the hollow cylindrical housing (112) by means of a pipe (162), the at least one pressure relief channel (134) opening into the upper part of the hollow cylindrical housing (112), the at least one fluid inlet opening (138) being radially arranged in the timing cylindrical chamber (121), the at least one outlet channel (131) being arranged below the timing cylindrical chamber (121) downstream of the main seat (126) .

4. - The timed automatic closing mechanism (2; 102) according to one of claims 1 to 3, **characterized in that** the secondary valve (29; 129) and the length of the plunger (28; 128) carrying said secondary valve (29; 129) are configured to close by radial sealing a bore (30; 130) located downstream of the main seat (26; 126) when the timing piston (24; 124) is in the up position.

5. - The timed automatic closing mechanism (2; 102) according to one of claims 1 to 3, **characterized in that** the secondary seat is constituted by a shoulder provided between the main seat (26; 126) and the at least one outlet channel (31; 131).

6. - The timed automatic closing mechanism (2; 102) according to one of claims 1 to 5, **characterized in that** the lateral surface of the plunger (28; 128) comprises at least one spline (41) configured to allow a passage of fluid from the timing cylindrical chamber (21; 121) to the at least one outlet channel (31; 131) when the main (25; 125) and secondary (29; 129) valves are open.

7. - The timed automatic closing mechanism (2; 102) according to one of claims 1 to 6, **characterized in that** the lateral surface of the control rod (7; 107) comprises at least one spline (33) configured to allow a passage of fluid from the timing cylindrical chamber (21; 121) to the at least one pressure relief channel (34; 134) when the auxiliary valve (18; 118) is open.

8. - The timed automatic closure mechanism (2; 102) according to one of claims 1 to 7, **characterized in that** it further comprises a flow limiter consisting of a tubular ring (42; 142) opposite one of the at least one fluid inlet opening (38; 138) and the at least one outlet channel (31; 131), the said tubular ring (42; 142) comprising windows (42a; 142a) of different sizes provided at the upper periphery of said ring (42; 142) to allow the fluid flow to be limited and internal splines (42b; 142b) fitting on outer splines (21a; 121a) provided at the lower part of the timing cylindrical chamber (21; 121)

9. - A tap (1; 101) for a shower, washbasin or urinal incorporating a timed automatic closing mechanism (2; 102) according to one of claims 1 to 8.
